# EUROPEAN PATENT APPLICATION

(11) **EP 4 604 039 A1**
(43) Date of publication of application: **20.08.2025**
(21) Application number: 23891968.2
(22) Date of filing: 14.11.2023
(51) Int. Cl.: G06Q 20/32, G06Q 20/40, G02B 27/01, G06F 3/01, G06F 3/00, G06V 40/20, H04W 4/80

(54) **HEAD MOUNTED DEVICE SUPPORTING MOBILE PAYMENT, OPERATION METHOD THEREOF, AND ELECTRONIC DEVICE**

(30) Priority: 18.11.2022 KR 20220155272; 07.12.2022 KR 20220169906; 17.01.2023 KR 20230006827
(71) Applicant: Samsung Electronics Co., Ltd., Suwon-si, Gyeonggi-do 16677 (KR)
(72) Inventor: KANG, Changtaek, Suwon-si Gyeonggi-do 16677 (KR); SON, Dongil, Suwon-si Gyeonggi-do 16677 (KR)
(74) Representative: Gulde & Partner
(86) International application number: PCT/KR2023/018237
(87) International publication number: WO 2024/106901

(57) **Abstract**

A head mounted device according to an embodiment may comprise: a first camera; a sensor circuit which acquires authentication data; a first communication interface; and at least one first processor which is operatively connected to the first camera, the sensor circuit, and the first communication interface. The at least one first processor may be configured to acquire payment-related data on the basis of an image or video acquired through the first camera. The at least one first processor may be configured to acquire the authentication data through the sensor circuit on the basis of the acquired payment-related data. The at least one first processor may be configured to transmit a payment request signal, which requests wireless transmission of payment information, to an electronic device through the first communication interface on the basis of the acquired authentication data.

## Description

### [Technical Field]

The disclosure relates to a head-mounted device supporting mobile payment via wireless communication, an operation method thereof, and an electronic device

### [Background Art]

Electronic devices are rapidly evolving with the advancement of information technology (IT), offering users a wide range of features. Electronic devices may provide network-based communication services, such as multimedia services including music services, video services, or digital broadcast services, call or wireless Internet services.

Recently, fintech-a fusion of financial services and IT-has gained attention. Regarded as a paradigm shift in the financial sector, fintech is broadening its reach beyond traditional online financial services to include offline financial services and financial platform services. In response, electronic device manufacturers are actively working to develop mobile payment platforms, expand mobile payment services, and enhance mobile banking through partnerships with credit card companies and banks.

Electronic device manufacturers are actively working to develop mobile payment platforms, expand mobile payment services, and enhance mobile banking through cooperation with credit card companies and banks.

### [Detailed Description of the Invention]

### [Technical Solution]

According to an embodiment of the disclosure, a head-mounted device may comprise a first camera, a sensor circuit configured to obtain authentication data, a first communication interface, and at least one first processor operatively connected to the first camera, the sensor circuit, and the first communication interface. The at least one first processor may be configured to obtain payment-related data based on an image or video obtained through the first camera. The at least one first processor may be configured to obtain the authentication data through the sensor circuit based on the obtained payment-related data. The at least one first processor may be configured to, based on obtaining the authentication data, transmit a payment request signal requesting for wirelessly transmitting payment information or the obtained authentication data to an electronic device through the first communication interface.

According to an embodiment of the disclosure, a method for operating a head-mounted device may comprise obtaining payment-related data based on an image or video obtained through a first camera. The method for operating the head-mounted device according to an embodiment may comprise obtaining authentication data through a sensor circuit based on the obtained payment-related data. The method for operating the head-mounted device according to an embodiment may comprise, based on obtaining the authentication data, transmitting a payment request signal requesting for wirelessly transmitting payment information or the obtained authentication data to an electronic device through a first communication interface.

According to an embodiment of the disclosure, a non-transitory computer-readable storage medium storing one or more programs may comprise obtaining payment-related data based on an image or video obtained through a first camera based on an execution of an application. The storage medium according to an embodiment may comprise obtaining authentication data through a sensor circuit based on the obtained payment-related data. The storage medium according to an embodiment may comprise, based on obtaining the authentication data, transmitting a payment request signal requesting for wirelessly transmitting payment information or the obtained authentication data to an electronic device through a first communication interface.

According to an embodiment of the disclosure, an electronic device may comprise a second communication interface, a wireless communication coil configured to wirelessly transmit data, and at least one second processor operatively connected to the second communication interface and the wireless communication coil. The at least one second processor may be configured to receive a payment request signal or authentication data from a head-mounted device through the second communication interface. The at least one second processor may be configured to wirelessly transmit payment information through the wireless communication coil based on receiving the payment request signal or the authentication data.

### [Brief Description of Drawings]

FIG. 1 is a block diagram illustrating an electronic device in a network environment according to an embodiment of the disclosure;
FIG. 2 is a perspective view illustrating an internal configuration of a wearable electronic device according to an embodiment of the disclosure;
FIGS. 3A and 3B are views illustrating front and rear surfaces of a wearable electronic device according to an embodiment;
FIG. 4 is a block diagram illustrating a head-mounted device according to an embodiment of the disclosure;
FIG. 5A is a block diagram illustrating an electronic device according to an embodiment of the disclosure;
FIG. 5B is a perspective view illustrating a charging case of a head-mounted device according to an embodiment;
FIG. 6A is a flowchart illustrating an operation method of a head-mounted device according to a first embodiment of the disclosure;
FIG. 6B is a view illustrating a signal flow between a head-mounted device and an electronic device according to a first embodiment of the disclosure;
FIG. 6C is a view illustrating a signal flow between a head-mounted device and an electronic device according to a second embodiment of the disclosure;

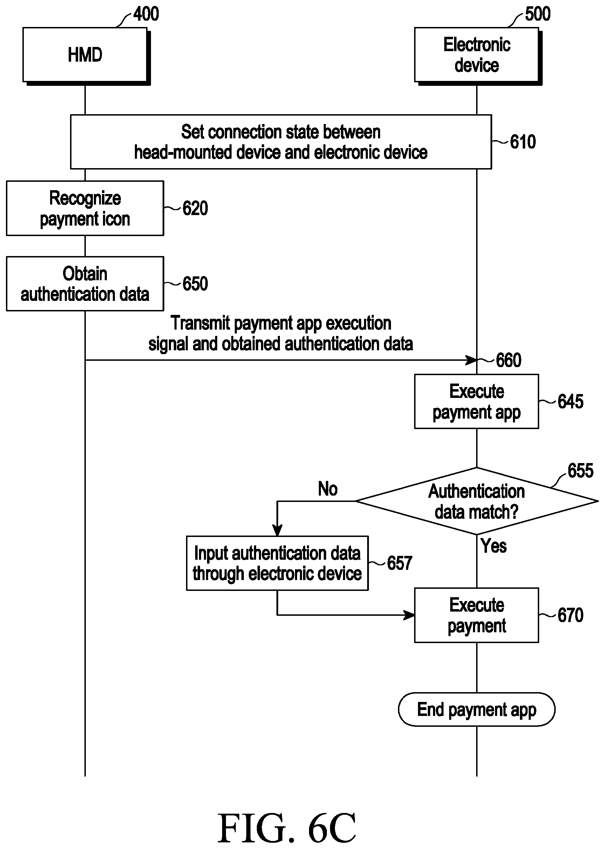

FIG. 6C is a view illustrating a signal flow between a head-mounted device and an electronic device according to a third embodiment of the disclosure;

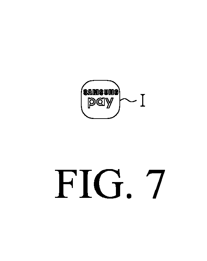

FIG. 7 illustrates a visual identifier including data related to payment according to an embodiment of the disclosure;

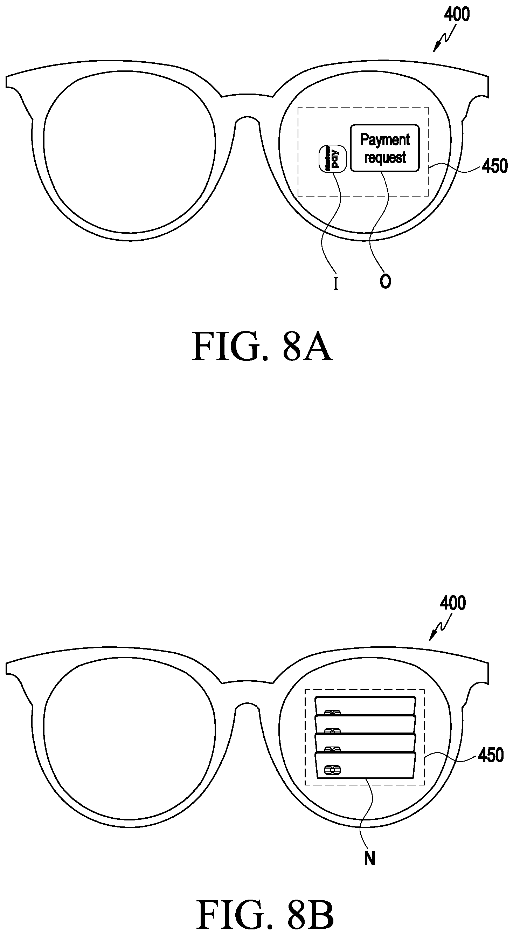

FIGS. 8A and 8B illustrate a visual notification related to payment provided through a display according to an embodiment of the disclosure;

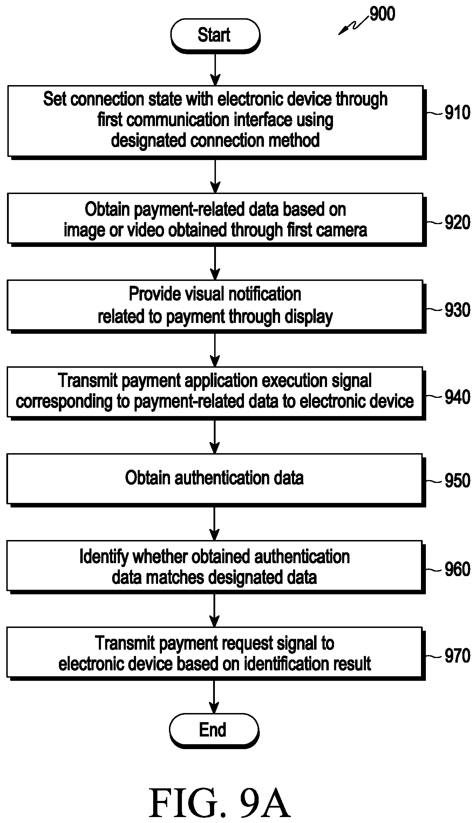

FIG. 9A is a flowchart illustrating an operation method of a head-mounted device according to a fourth embodiment of the disclosure;

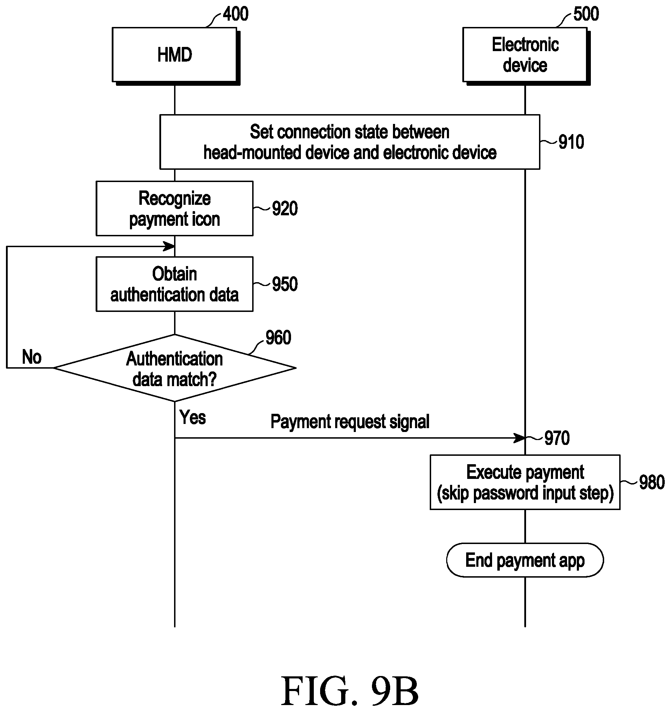

FIG. 9B is a view illustrating a signal flow between a head-mounted device and an electronic device according to a fourth embodiment of the disclosure;

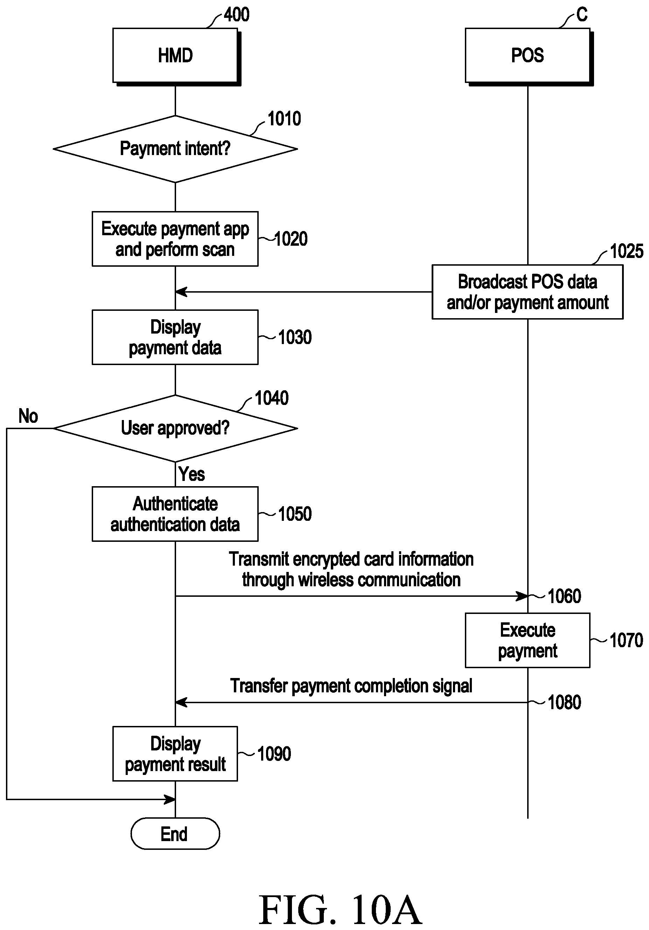

FIG. 10A is a flowchart illustrating a signal flow between a head-mounted device and a payment device according to a fifth embodiment of the disclosure;

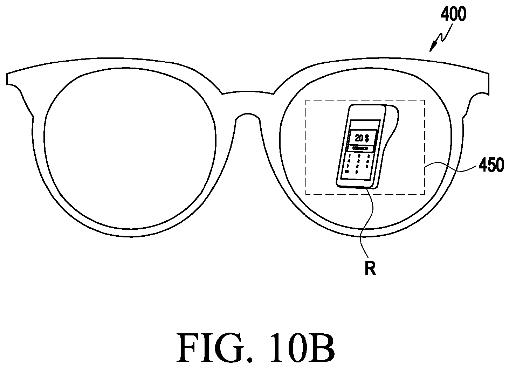

FIG. 10B illustrates a visual notification related to payment provided through a display according to an embodiment of the disclosure;

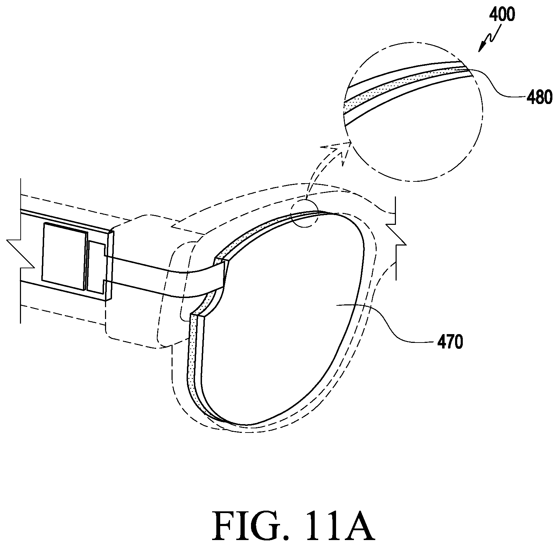

FIG. 11A is a partial perspective view illustrating a head-mounted device including a wireless communication coil according to an embodiment of the disclosure; and

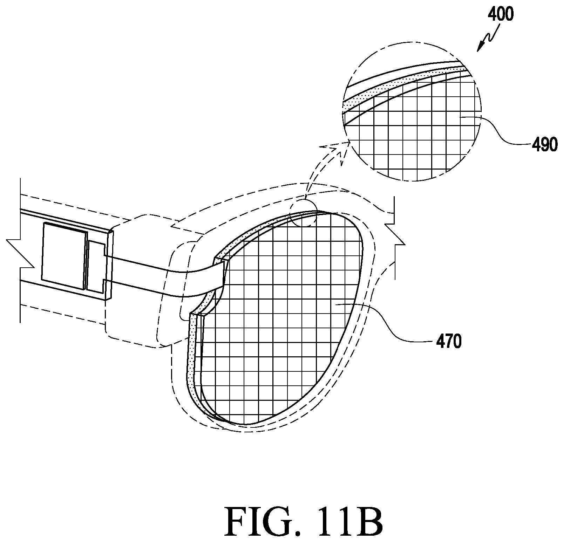

FIG. 11B is a partial perspective view illustrating a head-mounted device including a wireless communication coil according to an embodiment of the disclosure.

### [Mode for Carrying out the Invention]

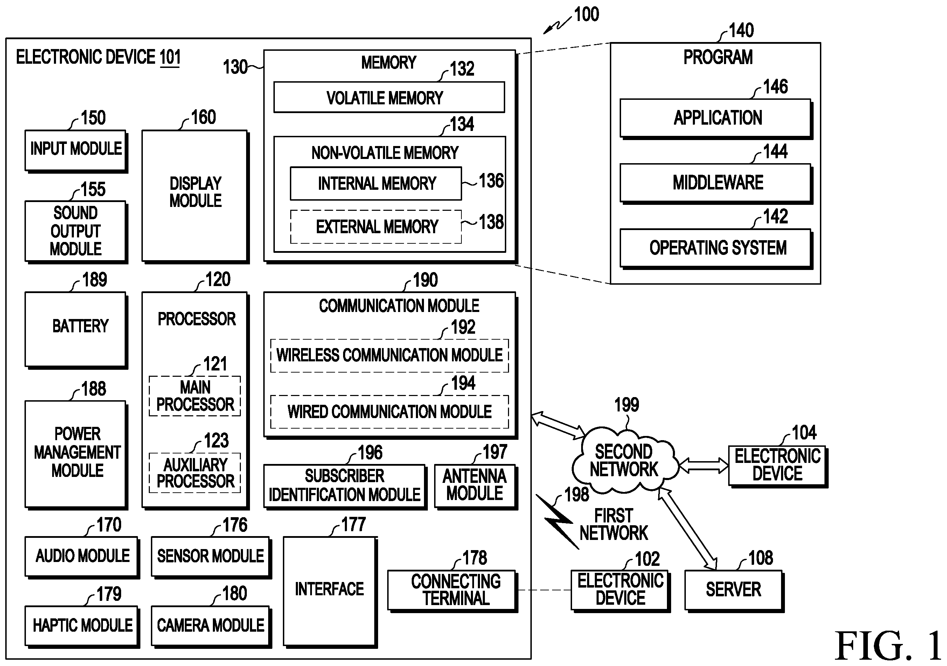

FIG. 1 is a block diagram illustrating an electronic device 101 in a network environment 100 according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™} wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

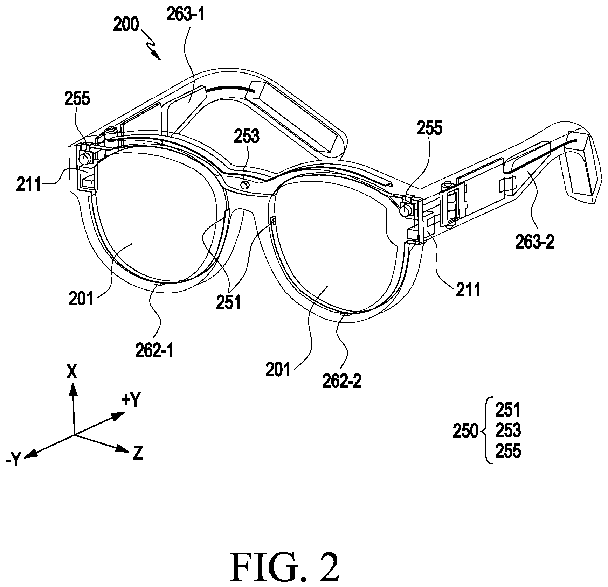

FIG. 2 is a perspective view illustrating an internal configuration of a wearable electronic device 200 according to an embodiment of the disclosure.

Referring to FIG. 2, according to an embodiment of the disclosure, a wearable electronic device 200 may include at least one of a light output module 211, a display member 201, and a camera module 250.

According to an embodiment of the disclosure, the light output module 211 may include a light source capable of outputting an image and a lens guiding the image to the display member 201. According to an embodiment of the disclosure, the light output module 211 may include at least one of a liquid crystal display (LCD), a digital mirror device (DMD), a liquid crystal on silicon (LCoS), an organic light emitting diode (OLED), or a micro light emitting diode (micro LED).

According to an embodiment of the disclosure, the display member 201 may include an optical waveguide (e.g., a waveguide). According to an embodiment of the disclosure, the image output from the light output module 211 incident on one end of the optical waveguide may propagate inside the optical waveguide and be provided to the user. According to an embodiment of the disclosure, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 211 to the user's eyes using at least one diffractive element or reflective element.

According to an embodiment of the disclosure, the camera module 250 may capture still images and/or moving images. According to an embodiment, the camera module 250 may be disposed in a lens frame and may be disposed around the display member 201.

According to an embodiment of the disclosure, a first camera module 251 may capture and/or recognize the trajectory of the user's eye (e.g., pupil or iris) or gaze. According to an embodiment of the disclosure, the first camera module 251 may periodically or aperiodically transmit information related to the trajectory of the user's eye or gaze (e.g., trajectory information) to a processor (e.g., the processor 120 of FIG. 1).

According to an embodiment of the disclosure, a second camera module 253 may configured to capture an external image.

According to an embodiment of the disclosure, a third camera module 255 may be used for hand detection and tracking, and recognition of the user's gesture (e.g., hand motion). According to an embodiment of the disclosure, the third camera module 255 may be used for 3 degrees of freedom (3DoF) or 6DoF head tracking, location (space, environment) recognition and/or movement recognition. The second camera module 253 may also be used for hand detection and tracking and recognition of the user's gesture. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

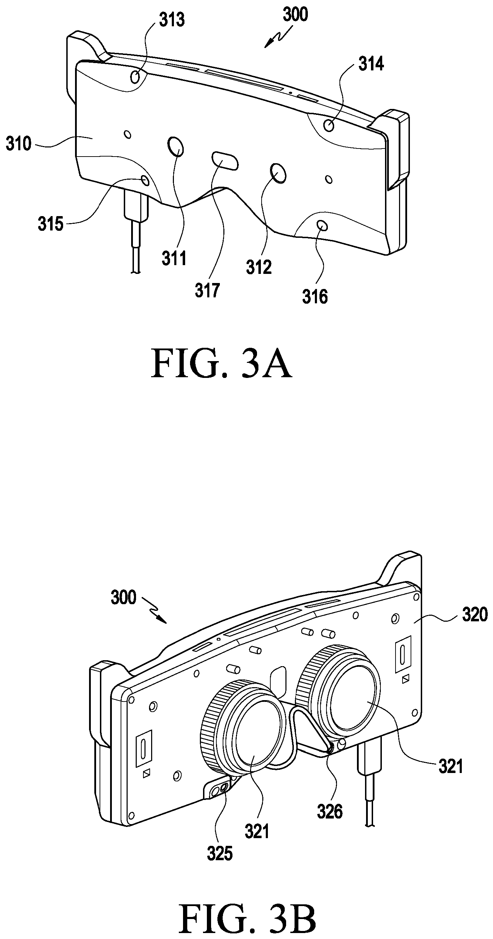

FIGS. 3A and 3B are views illustrating front and rear surfaces of a wearable electronic device 300 according to an embodiment.

Referring to FIGS. 3A and 3B, in an embodiment, camera modules 311, 312, 313, 314, 315, and 316 and/or a depth sensor 317 for obtaining information related to the ambient environment of the wearable electronic device 300 may be disposed on the first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, location (space or environment) recognition, and/or movement recognition. In an embodiment, the camera modules 311 and 312 may be used for hand detection and tracking and recognition of the user's gesture.

In an embodiment, the depth sensor 317 may be configured to transmit a signal and receive a signal reflected from an object and be used for identifying the distance to the object, such as time of flight (TOF). Alternatively or additionally to the depth sensor 317, the camera modules 313, 314, 315, and 316 may identify the distance to the object.

According to an embodiment, camera modules 325 and 326 for face recognition and/or a display 321 (and/or lens) may be disposed on the second surface 320 of the housing.

In an embodiment, the face recognition camera modules 325 and 326 adjacent to the display may be used for recognizing the user's face or may recognize and/or track both eyes of the user.

In an embodiment, the display 321 (and/or lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3A and 3B, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide the user experience based on augmented reality, virtual reality, and/or mixed reality while worn on the user's head.

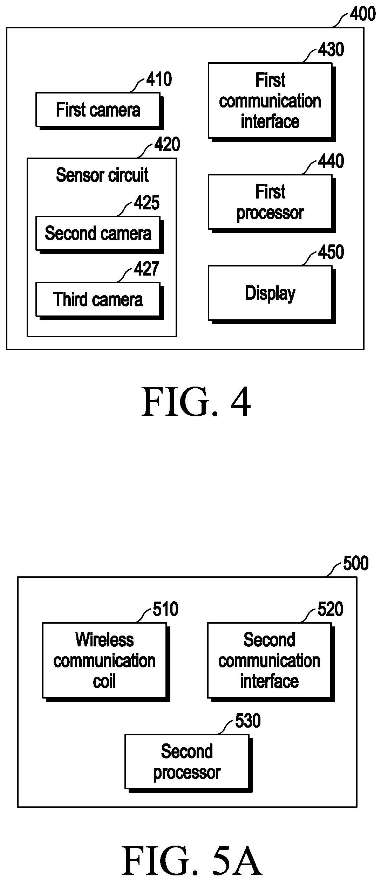

FIG. 4 is a block diagram illustrating a head-mounted device (HMD) 400 according to an embodiment of the disclosure.

Referring to FIG. 4, the head-mounted device 400 (e.g., the wearable electronic device 200 of FIG. 2 or the wearable electronic device 300 of FIG. 3A) according to an embodiment may include a first camera 410, a sensor circuit 420, a first communication interface 430, a first processor 440 (e.g., the processor 120 of FIG. 1) and/or a display 450. Here, the head-mounted device 400 may include some of the components of the electronic device 101 of FIG. 1, the wearable electronic device 200 of FIG. 2, or the wearable electronic device 300 of FIG. 3A.

In an embodiment, the first camera 410 (e.g., the second camera module 253 of FIG. 2) is included in the head-mounted device 400 and may capture an image or video of the outside (e.g., in front). In an embodiment, the first camera 410 may be disposed so that a field of view (FOV) includes a gaze direction of the user wearing the head-mounted device 400, and may obtain an image or video corresponding to an image or video recognizable by the user.

In an embodiment, the sensor circuit 420 may configured to obtain authentication data. In an embodiment, the authentication data may include the user's biometric data or a designated pattern.

In an embodiment, the sensor circuit 420 may include a second camera 425 (e.g., the first camera module 251 of FIG. 2) that captures the user's eyeball. In an embodiment, the second camera 425 may capture and/or recognize an iris and/or a pupil included in the captured user's eyeball. In an embodiment, the second camera 425 may be provided with an LED that emits light (e.g., infrared (IR) light) of a designated frequency band to the user's eyeball.

In an embodiment, the head-mounted device 400 or the electronic device (e.g., the electronic device 500 of FIG. 5A) may extract the image of the captured and/or recognized iris, and use the extracted image of the iris as biometric data and/or authentication data. In an embodiment, the head-mounted device 400 may track the user's gaze direction based on the captured and/or recognized pupil. In an embodiment, the sensor circuit 420 may further include a biometric sensor (not illustrated) that obtains the user's biometric data, such as a fingerprint sensor (not illustrated), a voice sensor (not illustrated), or a face recognition sensor (not illustrated), and a motion sensor (not illustrated) that detects the user's head movement or a touch sensor (not illustrated) that detects the user's touch.

In an embodiment, the sensor circuit 420 may include a third camera 427 (e.g., the third camera module 255 of FIG. 2) that detects the user's hand or recognizes the user's gesture (e.g., hand motion). In an embodiment, the third camera 427 is disposed to capture a designated position or direction where the user's hand may be positioned, and may capture an image corresponding to the user's gesture. In an embodiment, the head-mounted device 400 or the electronic device (e.g., the electronic device 500 of FIG. 5A) may use the user's gesture as authentication data by determining whether the user's gesture captured or recognized by the third camera 427 matches a designated pattern. In an embodiment, the user's gesture may be used as authentication data as well as authentication data related to payment. In an embodiment, the user's gesture may be a payment-related signature or a pattern for unlocking the smartphone on a virtual screen. In an embodiment, the user may input a pattern using a gaze as well as input a pattern using the user's hand motion.

In an embodiment, the first communication interface 430 may communicate with an electronic device (e.g., the electronic device 500 of FIG. 5A) through a designated communication scheme. In an embodiment, the head-mounted device 400 may set a connection state with the electronic device 500 in a connection method designated through the first communication interface 430. Here, the operation of setting the connection state may include an operation in which the head-mounted device 400 performs wireless connection with an electronic device (e.g., the electronic device 500 of FIG. 5A) through the first communication interface 430. For example, the designated communication scheme may be a wired communication scheme, or at least one wireless communication scheme among Bluetooth (BT), Wi-Fi direct, mobile hotspot, and Wi-Fi connection and/or Wi-Fi tethering using AP (access point).

In an embodiment, the first processor 440 may execute an application or operation stored in memory (not illustrated, e.g., the memory 130 of FIG. 1). In an embodiment, the first processor 440 may control at least one other component (e.g., a hardware or software component) included in the head-mounted device 400, or may perform various data processing or computations.

In an embodiment, the display 450 may provide a visual notification to the user by displaying a specific screen recognizable by the user. In an embodiment, the display 450 may be disposed to display a specific screen in front of the user's eyeball. For example, the display 450 may include a liquid crystal display (LCD), a digital mirror device (DMD) display, a liquid crystal on silicon (LCoS) display, an organic light emitting diode (OLED) display, or a micro LED display. In an embodiment, when the display 450 is formed of one of a liquid crystal display device, a digital mirror device display, or an LCoS display, it may further include a light source for irradiating light to a screen output area of the display 450. In an embodiment, when the display 450 is formed of one of an organic light emitting diode display or a micro LED display, a good quality screen may be provided even when a separate light source is not included. In an embodiment, the display 450 may display a screen in a transparent or translucent display area (e.g., the display member 201 of FIG. 2), and may transfer light to the display area through a waveguide.

FIG. 5A is a block diagram illustrating an electronic device 500 (e.g., the electronic device 101 of FIG. 1) according to an embodiment of the disclosure.

Referring to FIG. 5A, an electronic device 500 according to an embodiment may include a wireless communication coil 510, a second communication interface 520, and/or a second processor 530 (e.g., the processor 120 of FIG. 1).

In an embodiment, the wireless communication coil 510 may be a near field communication (NFC) coil or antenna, or a magnetic secure transmission (MST) coil or antenna. In an embodiment, the wireless communication coil 510 may be implemented as a coil or an antenna, and for example, may be implemented in the form of a chip on a circuit board. In an embodiment, the wireless communication coil 510 may transmit payment information, which is data of a short-range wireless communication or magnetic secure transmission type. In an embodiment, a payment device (e.g., the payment device C of FIG. 10A, e.g., a point of sales (POS) device, an NFC reader, and/or an MST reader) may receive payment information transmitted from the wireless communication coil 510.

In an embodiment, the electronic device 500 may communicate with a mobile payment service server for implementing a mobile payment service, and/or a payment server of a card company (and/or a financial institution). In an embodiment, the head-mounted device (e.g., the head-mounted device 400 of FIG. 4) may communicate with a mobile payment service server for mobile payment service implementation, and/or a payment server of a card company (and/or a financial institution) directly or through the electronic device 500.

For example, the mobile payment service server may include a server (e.g., a token service provider (TSP) server) that manages tokens related to payment applications. For example, a payment server of a card company (and/or a financial institution) may include a server (e.g., a trusted service manager (TSM) server) that manages the user's financial account. According to an embodiment, the mobile payment service server may provide payment information (e.g., a one-time token (OTT)) to the electronic device 500 at each payment transaction by interacting with the payment server of a card company (and/or a financial institution), and the electronic device 500 may transmit the payment information, received after undergoing designated security authentication, to the payment device (e.g., the payment device C of FIG. 10A). The payment device (e.g., the payment device C of FIG. 10A) may complete the payment transaction by transmitting the payment information back to the payment server of the card company (and/or financial institution) and obtaining payment approval.

In an embodiment, for near field communication (NFC), the NFC standard (e.g., ISO/IEC 21481) specifies a communication protocol and data exchange format and adopts an unauthorized radio frequency ISM band, so that it may use a frequency in the 13.56 MHz band. In an embodiment, the wireless communication coil 510 may include an NFC antenna for near field communication, a modulator that modulates a signal to be transmitted through the antenna, and a demodulator that demodulates a signal received through the antenna may be included. In an embodiment, the NFC antenna may be connected to the modulator and demodulator through passive elements, and may be mounted on the inner surface of the case of the communication device to wirelessly communicate with other communication devices based on the magnetic field generated by the antenna.

In an embodiment, the magnetic secure transmission (MST) method uses a pulse-modulated magnetic field to transmit data to the payment device, and may emit magnetic pulses in the form similar to magnetic field fluctuation caused by swiping of a real card. For example, when the wireless communication coil 510 sequentially transmits magnetic pulses in n radiation patterns, the reception radiation pattern adopted by the actual payment device (e.g., the payment device C of FIG. 10A) may correspond to the nth radiation pattern. In this case, before the wireless communication coil 510 transmits the magnetic pulse according to the nth radiation pattern, the operation of transmitting the magnetic pulse in n-1 radiation patterns may become meaningless.

In an embodiment, magnetic secure transmission may be used to transmit tokenized card data to the payment device. In an embodiment, the actual payment card number or portion of it is replaced by a cryptographically generated token, and the token may be in the form of track data, including token data in the format similar to a standard primary account number (PAN). The PAN may include a valid bank identification number (BIN). The token may be downloaded from the card issuer or another online source, or locally generated. The MST transmission of the token may replace the transmission of the valid card number by transmitting a cryptographically generated token that is valid only for one transaction. Therefore, the MST transmission of the token may eliminate the security risk inherent in standard magnetic secure transmission without the need to replace the hardware of the present payment device.

According to an embodiment, one or more pieces of track data may be transmitted to enhance compatibility with hardware and software of the existing payment device. In an embodiment, the transmission of track 1 data may follow the transmission of track 2 data, or the transmission of track 2 data may follow the transmission of track 1 data.

In an embodiment, the track 1 data may include start sentinel (SS), field code (FC), primary account number (PAN), field separator (FS), name, additional data (including expiration date and/or service code), discretionary data, end sentinel (ES), and/or longitudinal redundancy check character (LRC). In an embodiment, the track 2 data may include start sentinel (SS), primary account number (PAN), field separator (FS), additional data (including expiration date and/or service code), discretionary data, end sentinel (ES), and/or longitudinal redundancy check character (LRC). In an embodiment, the track 3 data may include start sentinel (SS), field code (FC), use and security data(country code, currency code, currency exponent, amount authorized per cycle, amount remaining this cycle, cycle begin, cycle length, retry count, PIN control parameters, interchange controls, PAN service restriction, SAN-1 service restriction, SAN-2 service restriction, expiration date, and/or card sequence number, card security number.

For example, according to the magnetic secure transmission radiation pattern P1, the payment data may be converted into a format corresponding to track 2 of the real card, the Baud rate may be set to 200, and the number of '0' (i.e., lead zero) transmitted before transmission of payment data may be set to 30. Further, '0' (i.e., tail zero) transmitted after transmission of payment data is set to 15. After the magnetic pulse corresponding to the payment data is emitted in such a pattern, without a special delay time (delay = '0'), the magnetic pulse may be retransmitted in reverse order. For example, payment data is converted to a format corresponding to track 2, the Baud rate of magnetic pulses is set to 200, and the number of '0's (i.e., lead zeros) transmitted before transmission of payment data and the number of '0's (i.e., tail zeros) transmitted after transmission of the payment data may be set to 15 and 30, respectively.

For example, according to the radiation pattern P2, the payment data is converted into a format corresponding to track 2 of the real card, the Baud rate is set to 800, and the number of '0's (i.e., lead zeros) transmitted before the transmission of the payment data may be set to 30. Further, the number of '0's (i.e., tail zeros) transmitted after transmission of payment data may be set to 30. When the magnetic pulse is radiated in the radiation pattern P2 602, e.g., after 950 ms (delay = '950' in P2), the magnetic pulse may be radiated according to the next radiation pattern P3.

In an embodiment, the second communication interface 520 may communicate with a head-mounted device (e.g., the head-mounted device 400 of FIG. 2 or the first communication interface 430) through a designated communication scheme. In an embodiment, the electronic device 500 may set a connection state with the head-mounted device 400 in a connection method designated through the second communication interface 520. For example, the designated communication scheme may be a wired communication scheme, or at least one wireless communication scheme among Bluetooth (BT), Wi-Fi direct, mobile hotspot, and Wi-Fi connection and/or Wi-Fi tethering using AP (access point).

In an embodiment, the electronic device 500 may be directly communicatively connected to the head-mounted device 400 through a designated communication scheme through the second communication interface 520, and in an embodiment, may be communicatively connected through a separate device. For example, the electronic device 500 and the head-mounted device 400 may be communicatively connected to a separate external device (not illustrated), and a separate external device (not illustrated) may relay the communicative connection between the electronic device 500 and the head-mounted device 400. For example, a smartphone (not illustrated) connected to the head-mounted device 400 and the smartwatch 500 at the same time may set up an indirect communication connection between the head-mounted device 400 and the smartwatch 500 by relaying signal transmission/reception between the head-mounted device 400 and the smartwatch 500. In an embodiment, the electronic device 500 may be in the form of a ring including the wireless communication coil 510.

In an embodiment, the second processor 530 may execute an application or operation stored in memory (not illustrated, e.g., the memory 140 of FIG. 1). In an embodiment, the second processor 530 may control at least one other component (e.g., a hardware or software component) included in the electronic device 500, or may perform various data processing or computations.

In an embodiment, the electronic device 500 may be a portable communication device (e.g., a smartphone), a computer device, or a portable multimedia device (e.g., a tablet), or a wearable device such as a smart watch or earbuds. As an example, the electronic device 500 may be a charging case 500 of the head-mounted device 400.

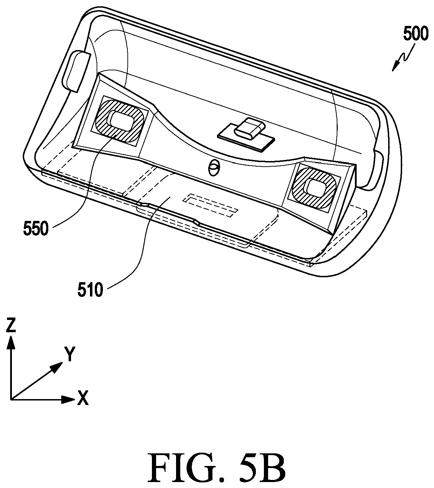

FIG. 5B is a perspective view illustrating a charging case 500 of a head-mounted device (e.g., the head-mounted device 400 of FIG. 4) according to an embodiment.

Referring to FIG. 5B, the charging case 500 of the head-mounted device 400 according to an embodiment may be an example of the electronic device of FIG. 5A. In an embodiment, the charging case 500 may communicate with the head-mounted device 400 through a designated communication scheme.

In an embodiment, the charging case 500 may include a charging coil 550 for charging a battery (e.g., the battery 189 of FIG. 1) included in the head-mounted device 400 in contact with or adjacent to the head-mounted device 400.

In an embodiment, the charging case 500 may include a wireless communication coil 510, which is a near field communication (NFC) coil or a magnetic secure transmission (MST) coil.

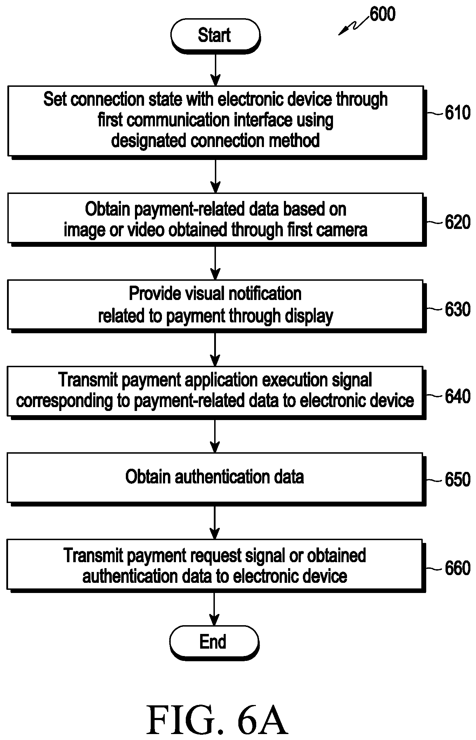

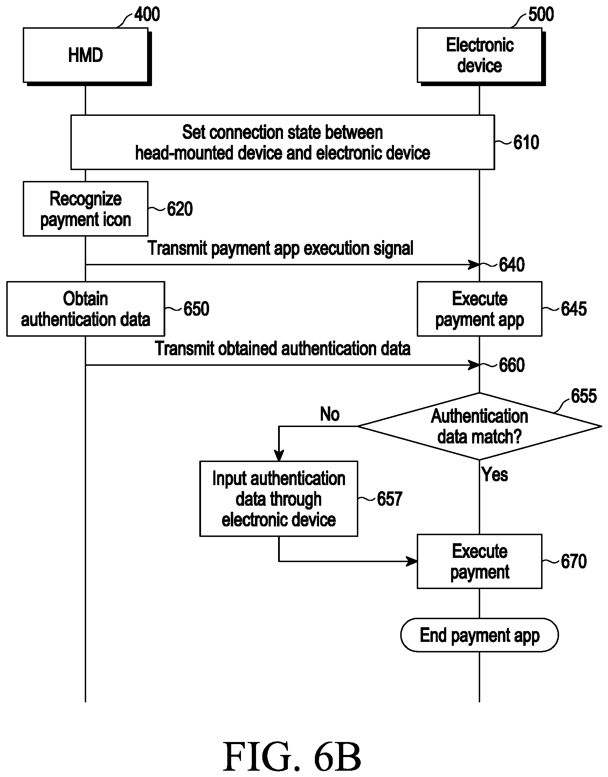

FIG. 6A is a flowchart illustrating an operation method of a head-mounted device 400 according to a first embodiment of the disclosure. FIG. 6B is a view illustrating a signal flow between a head-mounted device 400 and an electronic device 500 according to a first embodiment of the disclosure.

Referring to FIGS. 6A and 6B, the electronic device 500 according to an embodiment may be a portable communication device (e.g., a smartphone).

In an embodiment, the head-mounted device 400 according to the first embodiment may set a connection state with the electronic device 500 in a designated connection method through the first communication interface (e.g., the first communication interface 430 of FIG. 4) in operation 610.

In an embodiment, the head-mounted device 400 may set a connection state with the electronic device 500 in a wired or wireless designated connection method. In an embodiment, the head-mounted device 400 may set a connection state with the electronic device 500 when separated from the charging case or worn or booted by the user. In an embodiment, the head-mounted device 400 may transmit a signal to the electronic device 500 or receive a signal from the electronic device 500 based on the set connection state.

In an embodiment, the head-mounted device 400 may set a one-time connection state with the electronic device 500 owned by another person through a wired or wireless designated connection method. In an embodiment, the head-mounted device 400 may one-time use the personal information or security information included in authentication data, the payment application execution signal, and/or the payment request signal, or may automatically delete personal information or security information after the payment operation of the electronic device 500.

In an embodiment, in operation 610, the electronic device 500 may set a connection state with the head-mounted device 400 through a second communication interface (e.g., the second communication interface 520 of FIG. 5A) in a designated connection method.

In an embodiment, the head-mounted device 400 may display a screen on a display (e.g., the display 450 of FIG. 4), and a virtual object (e.g., the virtual object O of FIG. 8A) may be included on the screen. In an embodiment, data related to the virtual object may be generated by the head-mounted device 400 or may be received from the electronic device 500.

In an embodiment, the head-mounted device 400 performs processing and rendering an image corresponding to a virtual object and output the generated image data to a display member (e.g., the display member 201 of FIG. 2) through a display (e.g., the light output module 211 of FIG. 2).

In an embodiment, the electronic device 500 performs image processing and rendering processing image corresponding to the virtual object, and the head-mounted device 400 may receive image information (e.g., content) generated from the electronic device 500. The head-mounted device 400 may display a virtual object on the display member through a display using image information received from the electronic device 500.

In an embodiment, in operation 620, the head-mounted device 400 may obtain payment-related data based on an image or video obtained through the first camera (e.g., the first camera 410 of FIG. 4). The head-mounted device 400 may obtain an image or video in real-time through the first camera, and obtain payment-related data from the obtained image or video in real-time.

In an embodiment, the head-mounted device 400 may obtain payment-related data based on at least one of a visual identifier (e.g., the visual identifier I of FIG. 7), a designated gesture, or a designated object included in the obtained image or video. In an embodiment, the head-mounted device 400 may pre-store the designated visual identifier, the designated gesture, or the designated object related to payment, and identify the pre-stored visual identifier, gesture, or object from the obtained image or video.

In an embodiment, the visual identifier may be a payment icon (e.g., Samsung Pay). In an embodiment, the head-mounted device 400 may obtain data related to payment corresponding to the identified visual identifier and, accordingly, transmit a payment application execution signal to the electronic device 500.

In an embodiment, the designated gesture may be a hand motion designated in relation to a mobile payment, and may be a gesture related to the user's signature. In an embodiment, the designated gesture is designated corresponding to each of a plurality of payment methods (e.g., by card) or a plurality of payment applications, and the head-mounted device 400 may transmit a payment application execution signal corresponding to the identified designated gesture to the electronic device 500.

In an embodiment, the designated object may be a point of sales (POS) device, an NFC reader, or an MST reader.

In an embodiment, the head-mounted device 400 may obtain payment-related data through object classification or object recognition from the obtained image or video even when it is not designated in advance. In an embodiment, the head-mounted device 400 may be capable of optical character recognition (OCR) or object classification or object recognition using an artificial intelligence neural network.

In an embodiment, the head-mounted device 400 may track the user's gaze direction based on an image or video captured by the second camera (e.g., the second camera 425 of FIG. 4), and obtain data related to payment in response to the user's gaze direction tracked from the obtained image or video. In an embodiment, the head-mounted device 400 may track the user's gaze direction and obtain payment-related data from a visual identifier or an object at a position corresponding to the user's gaze direction from the image or video captured by the first camera.

In an embodiment, the head-mounted device 400 may obtain not only the user's gaze, but also an image or video corresponding to the user's gaze direction and the direction indicated by the user's hand (e.g., an operation in which the user points near the POS device with his hand), and obtain payment-related data based on the obtained image or video.

In an embodiment, the payment-related data may be the user's intent to pay or recognition of a circumstance where payment is required, or data related to a designated payment method in response to a designated visual identifier, a designated gesture, or a designated object. For example, when the head-mounted device 400 recognizes the payment icon (e.g., Samsung Pay), the head-mounted device 400 may obtain data (Samsung Pay) related to mobile payment corresponding to the corresponding icon.

In an embodiment, in operation 630, the head-mounted device 400 may provide a visual notification related to payment through a display (e.g., the display 450 of FIG. 4). In an embodiment, when payment-related data is obtained, the head-mounted device 400 may display a visual notification related to payment on the display. Here, the visual notification may be provided in various forms, and a recognized visual identifier, gesture, or virtual object may be displayed at a position adjacent to the object, or a designated notification (e.g., notification N of FIG. 8B) related to payment may be displayed.

In an embodiment, the head-mounted device 400 may receive an input corresponding to the visual notification related to the payment displayed on the display from the user, and determine whether to proceed with the payment based on the user's input. For example, the user's input may be obtained by gesture, touch, head movement, and pupil movement. In an embodiment, the head-mounted device 400 may perform the next operation based on receiving an acknowledgment signal (ack signal) from the electronic device 500.

In an embodiment, the head-mounted device 400 may omit the operation 630 of providing a visual notification related to payment and/or the operation of receiving an input corresponding to the visual notification related to payment from the user.

In an embodiment, in operation 640, the head-mounted device 400 may transmit a payment application execution signal corresponding to payment-related data to the electronic device 500. In an embodiment, the head-mounted device 400 may transmit a payment application execution signal to the electronic device 500 through the first communication interface in a designated connection method, and the payment application execution signal may be a signal for executing a payment application corresponding to the obtained payment-related data.

In an embodiment, when receiving the payment application execution signal, the electronic device 500 may execute the payment application in operation 645. Here, the payment application corresponds to payment-related data obtained by the head-mounted device 400, and may be, e.g., a Samsung Pay application.

In an embodiment, the electronic device 500 may execute the payment application corresponding to the payment application execution signal among one or more payment applications. In an embodiment, when the payment application is not stored, the electronic device 500 may transmit a signal related to payment suspension to the head-mounted device 400.

In an embodiment, when the payment application is not stored, the electronic device 500 may execute an installation operation (e.g., an operation of executing an application installation program (Google Play or App Store) that automatically installs the corresponding payment application.

In an embodiment, in operation 650, the head-mounted device 400 may obtain authentication data from the user. In an embodiment, the authentication data may include biometric data or a pattern (e.g., gesture) of a designated form. In an embodiment, the head-mounted device 400 may perform operation 650 based on receiving an acknowledgment signal (ack signal) corresponding to the payment application execution signal from the electronic device 500.

In an embodiment, in operation 660, the head-mounted device 400 may transmit a payment request signal for wirelessly transmitting payment information or obtained authentication data to the electronic device 500.

In an embodiment, the head-mounted device 400 may transmit authentication data obtained together with the payment request signal. In an embodiment, the payment request signal may be a signal for requesting payment information to be wirelessly transmitted when authentication data matches designated data.

In an embodiment, in operation 655, the electronic device 500 may identify whether the authentication data received from the head-mounted device 400 matches the designated data. Here, the designated data may be user authentication data previously stored in the electronic device 500.

In an embodiment, when the authentication data matches based on the identification result, the electronic device 500 may execute payment in operation 670. The electronic device 500 may omit a separate password authentication procedure and execute payment based on the authentication data received from the head-mounted device 400. In an embodiment, the electronic device 500 may transmit payment information of a near field communication or magnetic secure transmission method through the wireless communication coil.

In an embodiment, when the authentication data does not match based on the identification result, the electronic device 500 may receive authentication data in operation 657. In an embodiment, when the authentication data received from the head-mounted device 400 does not match the designated data, the electronic device 500 may receive authentication data (e.g., fingerprint, iris, pattern) from the user in the electronic device 500.

In an embodiment, when payment is executed, the electronic device 500 may transmit image data related to the user's signature information to the head-mounted device 400. In an embodiment, image data related to signature information may be previously stored in the head-mounted device 400 or the electronic device 500.

In an embodiment, the head-mounted device 400 may display the user's signature information through a display based on the received image data. In an embodiment, the head-mounted device 400 may display the signature information on the display with the signature information with a left-right inversion, allowing the signature information to be recognized from the opposite side of the user wearing the head-mounted device 400.

FIG. 6C is a view illustrating a signal flow between a head-mounted device 400 and an electronic device 500 according to a second embodiment of the disclosure.

Referring to FIG. 6C, in operation 610, the head-mounted device 400 and the electronic device 500 according to the second embodiment may set a connection state through the first communication interface (e.g., the first communication interface 430 of FIG. 4) and the second communication interface (e.g., the second communication interface 520 of FIG. 5A) in a designated connection method.

In an embodiment, in operation 620, the head-mounted device 400 may obtain payment-related data based on an image or video obtained through the first camera (e.g., the first camera 410 of FIG. 4).

In an embodiment, in operation 650, the head-mounted device 400 may obtain authentication data from the user.

In an embodiment, in operation 660, the head-mounted device 400 may sequentially or simultaneously transmit a payment application execution signal corresponding to payment-related data and the obtained authentication data to the electronic device 500.

In an embodiment, when receiving the payment application execution signal and the obtained authentication data, the electronic device 500 may execute a payment application in operation 645.

In an embodiment, authentication data obtained by the head-mounted device 400 may be included in the payment request signal. In an embodiment, the head-mounted device 400 may transmit a payment request signal to the electronic device 500 through the first communication interface.

In an embodiment, in operation 655, the electronic device 500 may identify whether the authentication data received from the head-mounted device 400 matches the designated data. Here, the designated data may be user authentication data previously stored in the electronic device 500.

In an embodiment, when the authentication data matches based on the identification result, the electronic device 500 may execute payment in operation 670. In an embodiment, the electronic device 500 may transmit payment information of a near field communication or magnetic secure transmission method through a wireless communication coil (e.g., the wireless communication coil 510 of FIG. 5A).

In an embodiment, when the authentication data does not match based on the identification result, the electronic device 500 may receive authentication data from the user in operation 657.

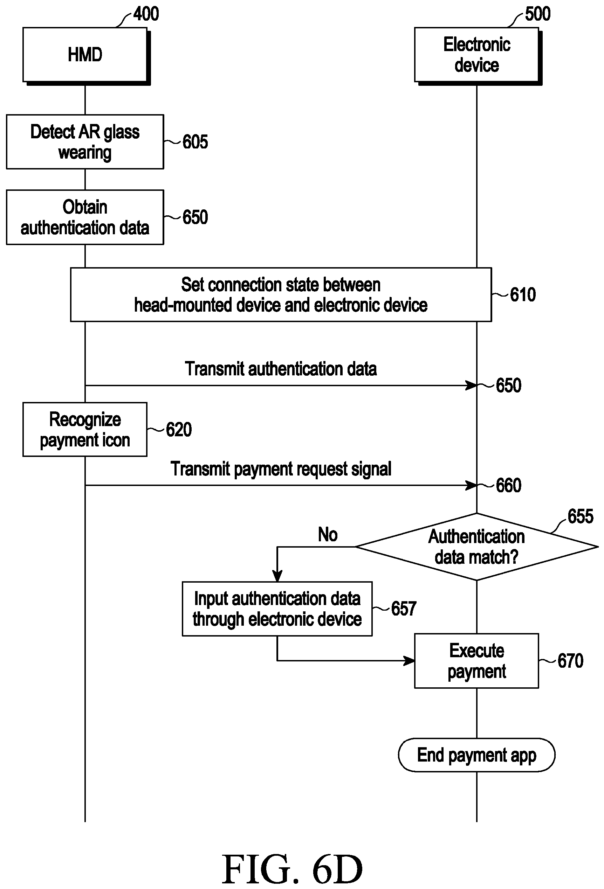

FIG. 6D is a signal flowchart between a head-mounted device 400 and an electronic device 500 according to a third embodiment of the disclosure.

Referring to FIG. 6D, the head-mounted device 400 according to the third embodiment may detect the user's wearing of the head-mounted device 400 in operation 605. In an embodiment, the head-mounted device 400 may detect the user's wearing of the head-mounted device 400 by detecting contact with the user's skin by a contact sensor or separation from the charging case through communication with the charging case. In an embodiment, when the head-mounted device 400 detects separation from the charging case, the power may be automatically turned on or booted.

In an embodiment, after detecting the user's wearing of the head-mounted device 400, the head-mounted device 400 may continuously monitor the wearing state and detect the user's release of the wearing state.

According to an embodiment, the head-mounted device 400 may obtain authentication data from the user in operation 650. When the charging case is unlocked or opened, according to an embodiment the head-mounted device 400 may capture and recognize the user's face through at least one camera (e.g., the first camera 410 of FIG. 4 or the second camera module 253 of FIG. 2) of the head-mounted device 400, and obtain authentication data accordingly.

According to an embodiment, the head-mounted device 400 and the electronic device 500 may set the connection state in a designated connection method through a first communication interface (e.g., the first communication interface 430 of FIG. 4) and a second communication interface (e.g., the second communication interface 520 of FIG. 5A) in operation 610.

In operation 655, according to an embodimen, the head-mounted device 400 may transmit the authentication data obtained from the user to the electronic device 500 through the first communication interface.

In an embodiment, the head-mounted device 400 may partially change the order of operation 605, operation 650, operation 610, and operation 655. For example, the head-mounted device 400 may perform operation 610 of setting the connection state in a specified connection method before operation 605 of detecting the wearing of the head-mounted device 400 or before operation 650 of obtaining authentication data.

In an embodiment, in operation 620, the head-mounted device 400 may obtain payment-related data based on an image or video obtained through the first camera (e.g., the first camera 410 of FIG. 4).

In an embodiment, in operation 660, the head-mounted device 400 may transmit a payment request signal requesting for wirelessly transmitting payment information to the electronic device 500. In an embodiment, when the user keeps on wearing the head-mounted device 400, the head-mounted device 400 and/or the electronic device 500 may skip the additional operation of transmitting/receiving authentication data. In an embodiment, the payment request signal may be a signal for requesting payment information to be wirelessly transmitted when authentication data matches the designated data.

In an embodiment, in operation 655, the electronic device 500 may identify whether the authentication data received from the head-mounted device 400 matches the designated data. Here, the designated data may be user authentication data previously stored in the electronic device 500.

In an embodiment, when the authentication data matches based on the identification result, the electronic device 500 may execute payment in operation 670. In an embodiment, the electronic device 500 may transmit payment information of a near field communication or magnetic secure transmission method through the wireless communication coil.

In an embodiment, when the authentication data does not match based on the identification result, the electronic device 500 may receive authentication data in operation 657.

In an embodiment, when authentication data does not match based on the identification result, the electronic device 500 may transmit a signal for deactivating an operation related to payment to the head-mounted device 400.

FIG. 7 illustrates a visual identifier I including data related to payment according to an embodiment of the disclosure.

Referring to FIG. 7, according to an embodiment, the head-mounted device (e.g., the head-mounted device 400 of FIG. 4) may obtain payment-related data based on an image or video obtained through the first camera (e.g., the first camera 410 of FIG. 4).

In an embodiment, the head-mounted device may recognize a visual identifier I included in the image or video, and the visual identifier I may be, e.g., a payment icon (e.g., Samsung Pay) as illustrated in FIG. 7 or a payment icon attached to or displayed on a POS device (e.g., the payment device of FIG. 10A). In an embodiment, when recognizing a payment icon as illustrated in FIG. 7, the head-mounted device may obtain payment-related data including the user's payment intent, a payment method, and/or a payment application.

FIGS. 8A and 8B illustrate a visual notification related to payment provided through a display 450 according to an embodiment of the disclosure.

Referring to FIGS. 8A and 8B, according to an embodiment, the head-mounted device 400 may provide a visual notification related to payment through the display 450 when payment-related data is obtained.

In an embodiment, as illustrated in FIG. 8A, the head-mounted device 400 may provide a visual notification including the virtual object O. In an embodiment, the virtual object O may be displayed adjacent to the visual identifier I or a designated object (not illustrated), which is a real object included in the image or video obtained through the first camera.

In an embodiment, the head-mounted device 400 may provide the visual identifier I included in the image or video obtained through the first camera (e.g., the first camera 410 of FIG. 4) or a visual notification (e.g., bordering) emphasizing the designated object (not illustrated) in the form of the virtual object.

In an embodiment, as illustrated in FIG. 8B, the head-mounted device 400 may display a designated notification N related to payment. In an embodiment, the designated notification N may be an image related to card information previously stored in the electronic device 500 or the head-mounted device 400, and the head-mounted device 400 may provide an image including at least one piece of pre-stored card information.

In an embodiment, the head-mounted device 400 may obtain an input corresponding to the notification N from the user, and determine whether to proceed with payment based on the user's input. For example, the user's input may be obtained by gesture, touch, head movement, and pupil movement.

In an embodiment, the head-mounted device 400 may display the notification N related to at least one pre-stored card information on the display 450 and receive a selection input corresponding to at least one card among at least one piece of pre-stored card information from the user. In an embodiment, the head-mounted device 400 may perform a payment based on the user's selection input.

In an embodiment, the head-mounted device 400 may select an optimal card based on at least one piece of pre-stored card information, and perform a payment based on the selected optimal card. In an embodiment, the head-mounted device 400 may select an optimal card based on optimal data and at least one piece of pre-stored card information.

In an embodiment, the head-mounted device 400 may obtain, from an image or video obtained from the first camera, affiliate data including data related to discounts, points accumulations and/or installment payments on payments using optical character recognition (OCR) or an artificial intelligence neural network. For example, the head-mounted device 400 may obtain an image or video where affiliate data is displayed in text or pictures, such as posters and advertisement banners, using the first camera.

In an embodiment, the head-mounted device 400 may obtain position information about the user using a GPS sensor and/or place information through a Wi-Fi scan, and obtain affiliate data including data related to discounts, points accumulation, and/or installment payments on payments based on position information and/or position information. In addition to GPS and/or Wi-Fi scan, the head-mounted device 400 may obtain place information about the place where the head-mounted device 400 is positioned by receiving a beacon signal or an external wireless signal.

FIG. 9A is a flowchart 900 illustrating an operation method of a head-mounted device 400 according to a fourth embodiment of the disclosure. FIG. 9B is a view illustrating a signal flow between a head-mounted device 400 and an electronic device 500 according to a fourth embodiment of the disclosure.

Referring to FIGS. 9A and 9B, According to the fourth embodiment, the head-mounted device 400 may directly perform an authentication operation to minimize the operations of the electronic device 500.

In an embodiment, in operation 910, the head-mounted device 400 may set a connection state with the electronic device 500 in a designated connection method through a first communication interface (e.g., the first communication interface 430 of FIG. 4). According to an embodiment, the electronic device 500 may set a connection state with the head-mounted device 400 through a second communication interface (e.g., the second communication interface 520 of FIG. 5A) in operation 910.

In an embodiment, in operation 920, the head-mounted device 400 may obtain payment-related data based on an image or video obtained through the first camera (e.g., the first camera 410 of FIG. 4).

In an embodiment, in operation 930, the head-mounted device 400 may provide a visual notification related to payment through a display (e.g., the display 450 of FIG. 4). In an embodiment, operation 930 of providing a visual notification related to payment may be omitted.

In an embodiment, in operation 940, the head-mounted device 400 may transmit a payment application execution signal corresponding to payment-related data to the electronic device 500.

In an embodiment, in operation 950, the head-mounted device 400 may obtain authentication data from the user.

In an embodiment, in operation 960, the head-mounted device 400 may identify whether the obtained authentication data matches the designated data. Here, the designated data may be user authentication data previously stored in the head-mounted device 400. In an embodiment, instead of transmitting authentication data to the electronic device 500, the head-mounted device 400 may directly identify whether the obtained authentication data matches the designated data.

In an embodiment, in operation 970, the head-mounted device 400 may transmit a payment request signal corresponding to payment-related data to the electronic device 500 based on the identification result.

According to an embodiment, when receiving the payment request signal, the electronic device 500 may execute payment in operation 980. In an embodiment, the electronic device 500 may transmit payment information of a near field communication or magnetic secure transmission method through a wireless communication coil (e.g., the wireless communication coil 510 of FIG. 5A).

FIG. 10A is a flowchart illustrating a signal flow between a head-mounted device 400 and a payment device C according to a fifth embodiment of the disclosure. FIG. 10B illustrates a visual notification related to payment provided through a display (e.g., the display 450) according to an embodiment of the disclosure.

Referring to FIGS. 10A and 10B, the head-mounted device 400 according to the fifth embodiment may directly transmit payment information to the payment device C through a communication scheme available in the head-mounted device 400 without using the wireless communication coil (e.g., the wireless communication coil 510 of FIG. 4) of the electronic device (e.g., the electronic device 500 of FIG. 4) connected through the first communication interface (e.g., the first communication interface 430 of FIG. 4).

In an embodiment, in operation 1010, the head-mounted device 400 may obtain payment-related data based on an image or video obtained through the first camera (e.g., the first camera 410 of FIG. 4). In an embodiment, when obtaining payment-related data, the head-mounted device 400 may determine that a payment intent is present in the user wearing the head-mounted device 400 and execute a payment operation.

In an embodiment, when the head-mounted device 400 obtains payment-related data, in operation 1020, the head-mounted device 400 may execute a payment application and scan the payment device C. In an embodiment, the head-mounted device 400 may store a payment application in advance and, when payment-related data is obtained, execute a payment application. In an embodiment, the head-mounted device 400 may scan at least one device present around it through a designated communication scheme (e.g., Bluetooth low energy (BLE)), and identify a device corresponding to the obtained payment-related data as the payment device C.

In an embodiment, the payment device C may be a device capable of communicating through a designated communication scheme. In an embodiment, the payment device C may receive a payment amount from a payment requester (e.g., a seller), and broadcast POS data and/or a payment amount related to the payment device C in a designated communication scheme in operation 1025. In an embodiment, the designated communication scheme may be a communication scheme capable of maintaining security.

In an embodiment, the head-mounted device 400 may obtain the POS data and/or the payment amount broadcast from the payment device C, and display the POS data and/or the payment amount on the display 450 in operation 1030. In an embodiment, as illustrated in FIG. 10b, the head-mounted device 400 may display an image R including the POS data and payment amount on the display area (e.g., the display member 201 of FIG. 2) through the display 450. In an embodiment, the head-mounted device 400 may display the image related to the POS data or the payment amount around the payment device C on the display area (e.g., the display member 201 of FIG. 2). In an embodiment, the head-mounted device 400 may determine whether the obtained payment amount and the amount displayed on the payment device C through the first camera (e.g., the first camera 410 of FIG. 4) match that recognized by optical character recognition (OCR). In an embodiment, the head-mounted device 400 may display the determination result through the display 450 or may provide a notification thereof. In an embodiment, when determining that the obtained payment amount and the amount displayed on the payment device C through the first camera (e.g., the first camera 410 of FIG. 4) do not match that recognized by OCR, the head-mounted device 400 may stop the payment operation.

In an embodiment, the head-mounted device 400 may skip operation 1010 of obtaining payment-related data and, when obtaining the POS data and/or the payment amount broadcast from the payment device C, perform a payment operation.

In an embodiment, when the head-mounted device 400 obtains payment-related data in operation 1010, it may skip operation 1025 of broadcasting POS data and/or payment amount by the payment device C, and may broadcast device information and a payment attempt signal of the head-mounted device 400.

In an embodiment, the head-mounted device 400 may obtain approval from the user in operation 1040. The head-mounted device 400 may obtain approval by an input received from the user in response to the POS data and/or the payment amount displayed on the display 450.

In an embodiment, the head-mounted device 400 may determine that approval from the user has been obtained when the POS data and/or the payment amount of the payment device C captured by the camera matches the POS data and/or the payment amount broadcast by the payment device C in the operation (operation 1010) of obtaining the payment-related data.

In an embodiment, in operation 1050, the head-mounted device 400 may obtain authentication data from the user and identify whether the obtained authentication data matches the designated data. Here, the designated data may be user authentication data previously stored in the head-mounted device 400.

In an embodiment, in operation 1060, the head-mounted device 400 may transmit payment information to the payment device C through a designated communication scheme. In an embodiment, the payment information may be card information previously stored in the head-mounted device 400, and may be transmitted in an encrypted state to maintain security.

According to an embodiment, in operation 1070, the payment device may execute payment based on the received payment information.

In an embodiment, in operation 1080, the payment device may transmit a payment completion signal to the head-mounted device 400 based on the execution of the payment.

In an embodiment, in operation 1090, the head-mounted device 400 may display a payment result through the display 450 based on the received payment completion signal. In an embodiment, the payment result may include a success of payment or a failure of payment and, when payment fails, a cause of failure may be displayed at the same time.

In an embodiment, when the head-mounted device 400 obtains payment-related data based on the image or video obtained through the first camera in operation 1010, the head-mounted device 400 may transmit payment information to the payment device C. In an embodiment, the head-mounted device 400 may obtain payment-related data from the image or video by tracking the user's gaze direction. In an embodiment, the head-mounted device 400 may obtain identification information (e.g., POS information) of the payment device C using payment-related data. In an embodiment, the head-mounted device 400 may transmit payment information to the payment device in a designated communication scheme based on the identification information about the payment device C. In an embodiment, the head-mounted device 400 may transmit payment information through beamforming centered on the gaze direction of the user wearing the head-mounted device 400 or the forward direction of the head-mounted device 400.

FIG. 11A is a partial perspective view illustrating a head-mounted device 400 including a wireless communication coil 480 according to an embodiment of the disclosure. FIG. 11B is a partial perspective view illustrating a head-mounted device 400 including a wireless communication coil 490 according to an embodiment of the disclosure.

Referring to FIGS. 11A and 11B, a head-mounted device according to an embodiment may include wireless a communication coil 480 or 490. In an embodiment, the wireless communication coil 480 or 490 may be near field communication (NFC) coils or magnetic secure transmission (MST) coils.

According to an embodiment, the wireless communication coil 480 or 490 of the head-mounted device 400 may be disposed in the lens 470. In an embodiment, the lens 470 may be transparent or translucent to allow light to pass therethrough.

According to an embodiment, the head-mounted device 400 may wirelessly transmit payment information through the wireless communication coil 480 or 490 when obtaining payment-related data or generating a payment request signal.

Referring to FIG. 11A, the wireless communication coil 480 according to an embodiment may be formed to surround an outer surface of the lens 470. In an embodiment, the lens 470 of the head-mounted device 400 may be formed in a plate or panel shape, and the wireless communication coil 480 may be wound on the outer surface of the lens 470 at least once.

Referring to FIG. 11B, the wireless communication coil 490 according to an embodiment may be wound inside a lens 470. In an embodiment, the lens 470 of the head-mounted device 400 may be formed in a plate or panel shape, and the wireless communication coil 490 may be formed of a transparent material, and may be wound and positioned inside the lens 470 or be disposed to overlap the lens 470.

According to an embodiment of the disclosure, A head-mounted device 200, 300, 400 may comprise a first camera 410, 253; a sensor circuit 420 configured to obtain authentication data, a first communication interface 430, and at least one first processor 440, 120 operatively connected to the first camera 410, 253, the sensor circuit 420, and the first communication interface 430. The at least one first processor 440, 120 may be configured to obtain payment-related data based on an image or video obtained through the first camera 410, 253. The at least one first processor 440; 120 may be configured to obtain the authentication data through the sensor circuit 420 based on the obtained payment-related data. The at least one first processor 440; 120 may be configured to, based on obtaining the authentication data, transmit a payment request signal requesting for wirelessly transmitting payment information or the obtained authentication data to an electronic device 500 through the first communication interface 430.

According to an embodiment, in the head-mounted device 200, 300, 400, the at least one first processor 440, 120 may be configured to set a connection state with the electronic device 500 in a designated connection method through the first communication interface 430.

According to an embodiment, in the head-mounted device 200, 300, 400, the at least one first processor 440, 120 may be configured to as at least part of obtaining the payment-related data, obtain the payment-related data based on at least one of a visual identifier I included in the obtained image or video, a designated gesture, or a designated object.

According to an embodiment, in the head-mounted device 200, 300, 400, the sensor circuit 420 may include a second camera 425, 251 configured to capture a user's eyeball. The at least one first processor 440, 120 may be configured to, as at least part of obtaining the payment-related data, track a direction of the user's gaze based on an image or video captured by the second camera 425, 251, and obtain the payment-related data corresponding to the tracked direction of the user's gaze in the obtained image or video.

According to an embodiment, in the head-mounted device 200, 300, 400, the at least one first processor 440, 120 may be configured to transmit a payment application execution signal corresponding to the payment-related data to the electronic device 500 when the payment-related data may be obtained.

According to an embodiment, in the head-mounted device 200, 300, 400, the at least one first processor 440, 120 may be configured to as at least part of transmitting the payment request signal or the obtained authentication data to the electronic device 500, identify whether the obtained authentication data matches designated data, and based on a result of the identification, transmit the payment request signal to the electronic device 500 through the first communication interface 430.

According to an embodiment. in the head-mounted device 200, 300, 400, the at least one first processor 440, 120 may be configured to transmit the obtained authentication data to the electronic device 500 through the first communication interface 430, as at least part of transmitting the payment request signal or the obtained authentication data to the electronic device 500.

According to an embodiment, in the head-mounted device 200, 300, 400, the sensor circuit 420 may include a second camera 425, 251 capturing a user's eyeball. The authentication data may be biometric data related to the user's iris, identified based on the image or video captured by the second camera 425, 251.

According to an embodiment, the head-mounted device 200, 300, 400 may further comprise a display 450 displaying a screen provided to a user. The at least one first processor 440, 120 may be configured to provide a visual notification N related to the payment through the display 450 when the payment-related data may be obtained.

According to an embodiment of the disclosure, a method for operating a head-mounted device 200, 300, 400 may comprise obtaining 620, 920, 1010 payment-related data based on an image or video obtained through a first camera 410, 253. The method for operating the head-mounted device 200, 300, 400 according to an embodiment may comprise obtaining 650, 950 authentication data through a sensor circuit 420 based on the obtained payment-related data. The method for operating the head-mounted device 200, 300, 400 according to an embodiment may comprise, based on obtaining the authentication data, transmitting 660, 970 a payment request signal requesting for wirelessly transmitting payment information or the obtained authentication data to an electronic device 500 through a first communication interface 430.

According to an embodiment, the method for operating the head-mounted device 200, 300, 400 may comprise setting a connection state with the electronic device 500 in a designated connection method through the first communication interface 430.

According to an embodiment, tn the method for operating the head-mounted device 200, 300, 400, obtaining the payment-related data may obtain the payment-related data based on at least one of a visual identifier I included in the obtained image or video, a designated gesture, or a designated object.

According to an embodiment, the method for operating the head-mounted device 200, 300, 400 may further comprise transmitting 640 a payment application execution signal corresponding to the payment-related data to the electronic device 500 when the payment-related data may be obtained.

According to an embodiment, in the method for operating the head-mounted device 200, 300, 400, transmitting 660, 970 the payment request signal or the obtained authentication data to the electronic device 500 may include identifying 960 whether the obtained authentication data matches designated data, and based on a result of the identification, transmitting 970 the payment request signal to the electronic device 500 through the first communication interface 430.

According to an embodiment, the method for operating the head-mounted device 200, 300, 400 may comprise obtaining 630, 930, 1030 providing a visual notification N related to the payment through a display 450.

According to an embodiment of the disclosure, a non-transitory computer-readable storage medium storing one or more programs may comprise obtaining payment-related data based on an image or video obtained through a first camera 410, 253 based on an execution of an application. The storage medium according to an embodiment may comprise obtaining authentication data through a sensor circuit 420 based on the obtained payment-related data. The storage medium according to an embodiment may comprise, based on obtaining the authentication data, transmitting a payment request signal requesting for wirelessly transmitting payment information or the obtained authentication data to an electronic device 500 through a first communication interface 430.

According to an embodiment of the disclosure, an electronic device 500 may comprise a second communication interface 520, a wireless communication coil 510 configured to wirelessly transmitdata, and at least one second processor 530, 120 operatively connected to the second communication interface 520 and the wireless communication coil 510. The at least one second processor 530, 120 may be configured to receive a payment request signal or authentication data from a head-mounted device 200,, 300, 400 through the second communication interface 520. The at least one second processor 530, 120 may be configured to wirelessly transmit payment information through the wireless communication coil 510 based on receiving the payment request signal or the authentication data.

According to an embodiment, in the electronic device 500, the at least one second processor 530, 120 may be configured to set a connection state with the head-mounted device 200, 300, 400 in a designated connection method through the second communication interface 520.

According to an embodiment, in the electronic device 500, the at least one second processor 530, 120 may be configured to, based on receiving the payment request signal or the authentication data from the head-mounted device 200, 300, 400, execute an payment application, based on receiving the payment application execution signal corresponding to the payment-related data from the head-mounted device 200, 300, 400. The at least one second processor 530, 120 may be configured to identify whether the authentication data received from the head-mounted device 200, 300, 400 matches designated data.

According to an embodiment, in the electronic device 500, the authentication data may be biometric data related to the user's iris, identified based on the image or video captured by the head-mounted device 200, 300, 400.

According to an embodiment, in the electronic device 500, the wireless communication coil 510 may be a coil of a near field communication NFC scheme or a magnetic secure transmission MST scheme. The transmitted payment information may be data of the near field communication scheme or the magnetic secure transmission scheme.

The electronic device according to an embodiment may be one of various types of electronic devices. The electronic devices may include, for example, a portable communication device (e.g., a smart phone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A head-mounted device (200; 300; 400), comprising:
a first camera (410; 253);
a sensor circuit (420) configured to obtain authentication data;
a first communication interface (430); and
at least one first processor (440; 120) operatively connected to the first camera (410; 253), the sensor circuit (420), and the first communication interface (430),
wherein the at least one first processor (440; 120) is configured to:
obtain payment-related data based on an image or video obtained through the first camera (410; 253);
obtain the authentication data through the sensor circuit (420) based on the obtained payment-related data; and
based on obtaining the authentication data, transmit a payment request signal requesting for wirelessly transmitting payment information or the obtained authentication data to an electronic device (500) through the first communication interface (430).

2. The head-mounted device (200; 300; 400) of claim 1, wherein the at least one first processor (440; 120) is configured to:
set a connection state with the electronic device (500) in a designated connection method through the first communication interface (430).

3. The head-mounted device (200; 300; 400) of claim 1 or 2, wherein the at least one first processor (440; 120) is configured to:
as at least part of obtaining the payment-related data, obtain the payment-related data based on at least one of a visual identifier (I) included in the obtained image or video, a designated gesture, or a designated object.

4. The head-mounted device (200; 300; 400) of any one of claims 1 to 3,
wherein the sensor circuit (420) includes a second camera (425; 251) configured to capture a user's eyeball, and
wherein the at least one first processor (440; 120) is configured to:
as at least part of obtaining the payment-related data,
track a direction of the user's gaze based on an image or video captured by the second camera (425; 251); and
obtain the payment-related data corresponding to the tracked direction of the user's gaze in the obtained image or video.

5. The head-mounted device (200; 300; 400) of any one of claims 1 to 4,
wherein the at least one first processor (440; 120) is configured to:
transmit a payment application execution signal corresponding to the payment-related data to the electronic device (500) when the payment-related data is obtained.

6. The head-mounted device (200; 300; 400) of any one of claims 1 to 5,
wherein the at least one first processor (440; 120) is configured to:
as at least part of transmitting the payment request signal or the obtained authentication data to the electronic device (500),
identify whether the obtained authentication data matches designated data; and
based on a result of the identification, transmit the payment request signal to the electronic device (500) through the first communication interface (430).

7. The head-mounted device (200; 300; 400) of any one of claims 1 to 6,
wherein the at least one first processor (440; 120) is configured to:
as at least part of transmitting the payment request signal or the obtained authentication data to the electronic device (500),
transmit the obtained authentication data to the electronic device (500) through the first communication interface (430).

8. The head-mounted device (200; 300; 400) of any one of claims 1 to 7,
wherein the sensor circuit (420) includes a second camera (425; 251) configured to capture a user's eyeball, and
wherein the authentication data is biometric data related to the user's iris, identified based on the image or video captured by the second camera (425; 251).

9. The head-mounted device (200; 300; 400) of any one of claims 1 to 8, further comprising a display (450) displaying a screen provided to a user,
wherein the at least one first processor (440; 120) is configured to:
provide a visual notification (N) related to the payment through the display (450) when the payment-related data is obtained.

10. A method for operating a head-mounted device (200; 300; 400), the method comprising:
obtaining (620; 920; 1010) payment-related data based on an image or video obtained through a first camera (410; 253);
obtaining (650; 950) authentication data through a sensor circuit (420) based on the obtained payment-related data; and
based on obtaining the authentication data, transmitting (660; 970) a payment request signal requesting for wirelessly transmitting payment information or the obtained authentication data to an electronic device (500) through a first communication interface (430) **.**

11. An electronic device (500), comprising:
a second communication interface (520);
a wireless communication coil (510) configured to wirelessly transmit data; and
at least one second processor (530; 120) operatively connected to the second communication interface (520) and the wireless communication coil (510),
wherein the at least one second processor (530; 120) is configured to:
receive a payment request signal or authentication data from a head-mounted device (200; 300; 400) through the second communication interface (520); and
wirelessly transmit payment information through the wireless communication coil (510) based on receiving the payment request signal or the authentication data.

12. The electronic device (500) of claim 11,
wherein the at least one second processor (530; 120) is configured to:
set a connection state with the head-mounted device (200; 300; 400) in a designated connection method through the second communication interface (520).

13. The electronic device (500) of claim 11 or 12,
wherein the at least one second processor (530; 120) is configured to:
based on receiving the payment request signal or the authentication data from the head-mounted device (200; 300; 400), execute a payment application; and
identify whether the authentication data received from the head-mounted device (200; 300; 400) matches designated data.

14. The electronic device (500) of any one of claims 11 to 13,
wherein the authentication data is biometric data related to the user's iris, identified based on the image or video captured by the head-mounted device (200; 300; 400).

15. The electronic device (500) of any one of claims 11 to 14,
wherein the wireless communication coil (510) is a coil of a near field communication (NFC) scheme or a magnetic secure transmission (MST) scheme, and
wherein the transmitted payment information is data of the near field communication scheme or the magnetic secure transmission scheme.
